# EUROPEAN PATENT SPECIFICATION

(11) **EP 1 186 996 B1**
(45) Date of publication and mention of the grant of the patent: **05.01.2011**
(21) Application number: 00119355.6
(22) Date of filing: 08.09.2000
(51) Int. Cl.: G06F 9/44

(54) **Method of programming for providing polymorphism**
Programmierverfahren zum Ermöglichen von Polymorphismus
Méthode de programmation pour faciliter le polymorphisme

(43) Date of publication of application: 13.03.2002
(73) Proprietor: SUN MICROSYSTEMS, INC., Santa Clara, California 95054 (US)
(72) Inventor: Jahnke, Jörg, 22453 Hamburg (DE)
(74) Representative: Harris, Ian Richard

(56) References cited:
- EP-A- 0 546 682
- JACKY J P ET AL: "AN OBJECT-ORIENTED PROGRAMMING DISCIPLINE FOR STANDARD PASCAL" COMMUNICATIONS OF THE ASSOCIATION FOR COMPUTING MACHINERY, [Online] vol. 30, no. 9, September 1987 (1987-09), pages 772-776, XP000007276 ASSOCIATION FOR COMPUTING MACHINERY, NEW YORK, US ISSN: 0001-0782 ACM Digital Library Retrieved from the Internet: <URL:http://www.acm.org/pubs/articles/jour nals/cacm/1987-30-9/p772-jacky/p772-jacky. pdf> [retrieved on 2001-04-18]
- BERGIN J: "Run-time design for Object-Oriented Extensions to Pascal" 23RD ANNUAL 1995 ACM COMPUTER SCIENCE CONFERENCE. THE SHRINKING FOOTPRINT AND GROWING IMPACT. PROCEEDINGS, PROCEEDINGS CSC'95: 23RD ANNUAL ACM COMPUTER SCIENCE CONFERENCE, NASHVILLE, TN, USA, [Online] 28 February 1995 (1995-02-28) - 2 March 1995 (1995-03-02), pages 97-103, XP002165891 New York, NY, USA, ACM, USA ISBN: 0-89791-737-5 ACM Digial Library Retrieved from the Internet: <URL:http://www.acm.org/pubs/articles/proc eedings/csc/259526/p97-bergin/p97-bergin.p df> [retrieved on 2001-04-23]
- ANONYMOUS: "Object-Oriented Programming in C - the Linnaeus System." IBM TECHNICAL DISCLOSURE BULLETIN, vol. 32, no. 9B, February 1990 (1990-02), pages 437-439, XP000082936 New York, US

## Description

### [Field of the Invention]

The present invention relates to a method of programming for providing polymorphism in a programming language, especially in a programming language that by default does not provide the feature of polymorphism.

### [Background of the Invention]

The creating of a computer program, which is also referred to as programming, typically comprises a plurality of steps, especially
1) developing a program logic to solve a particular problem,
2) writing the program logic in a specific programming language (which is also referred to as coding a program, or writing the code of the program), and
3) assembling/compiling/interpreting the program to turn it into machine language and make it executable on a data processing device.

The present invention is especially concerned with a method that is directed towards above-mentioned step 2).

The writing of a program logic in a specific programming language naturally strongly depends on the programming language itself, more specifically on the specific features provided by the programming language. Expressed simply, the goal of computer programming is to lay out a scheme for manipulating data stored in the data processing device in a desired way. As an example, the above-mentioned particular problem can be that of providing a database, and the program logic could be a set of tools for entering or deleting data from the database, and searching and displaying data from the database.

A known programming concept, to which a number of programming languages adhere, is that of procedural programming. Examples of such languages are FORTRAN and many versions of BASIC. In a typical program provided according to a procedural programming language, the code (the lines of statements in the given programming language) will typically first contain declarations defining the constants and variables to be used in the program, after which specific procedures (functions and routines are examples of procedures) are defined. Then there may follow an arrangement of commands in which certain procedures are called or invoked, in order to manipulate the variables.

The declarations of the variables and constants typically assign certain data types to certain names of variables and constants. For example, a variable can be of type integer, real number, string, array, etc. This is well known in the art of programming and need not be explained in detail here.

Typically, most programming languages will provide certain default settings of data types for specific variable or constant names (such as that any variable starting with the letter n or m is of type integer), and certain default procedures (such as common mathematical functions, e.g. the trigonometric functions). Such default procedures do not have to be explicitly coded, as it is sufficient to invoke them or call them in the course of the program, and the compiler or interpreter will then provide the appropriate functionality, e.g. from a library that is bound into the program upon interpreting or compiling.

The essence of procedural programming is that procedures and data are treated separately. Although such a concept is intuitively appealing, it provides the disadvantage that programs are inflexible, and it is difficult to change programs if new requirements are to be added, or old functions are to be changed. It also makes it difficult to reuse existing code for solving new problems. Namely, if one of the variables has to be changed (e.g. an array that is amended by adding further elements), then it is basically necessary to check every single procedure in the program, in order to see if the change with a specific variable affects any specific procedures, and if it does, then the specific procedure must be changed.

International application WO 96/35990 discloses a method of binding an operation, i.e. a function call, to an implementation of the operation, i.e. to a method. An operation may have more than one corresponding method, each different method taking different types of arguments. When a function call identifier is first encountered by searching a dictionary for a matching function (with the corresponding types of arguments), the identity of the entity, i.e. the matching function, is stored so as to provide adaptive binding of operations to their implementations.

In order to provide a more flexible concept of programming, so-called object-oriented programming was developed. In object-oriented programming, data and procedures are no longer treated separately, but they are treated as units belonging together. There are many object-oriented programming languages, such as JAVA or C++.

Object-oriented programming languages provide specific mechanisms not available in procedural programming languages. In the concept of object-orientation, there exist so-called classes, where a class is associated with certain attributes and certain methods. Attributes are data and methods are procedures. Then, individual examples of a class may be generated, where such examples of a class are characterised by the attributes of the class having specific values. Such specific examples of a class are also referred to as instances or objects. In other words, each object belongs to a class. Methods are procedures that are defined with respect to a class, and can be invoked with respect to objects of said class.

In object-orientation, the attributes and methods are encapsulated, which means that they are presented to the outside as a unit. It is therefore possible that certain attributes cannot be manipulated from the outside, but much rather only by invoking methods of the class to which the attribute belongs.

Another important aspect of object-orientation is called inheritance, which goes hand in hand with the possibility of generating new classes from existing classes. This is also referred to as deriving of classes. Then the class from which a new class is derived will be called superior class or superclass, and the new class will be called derived class. The concept of inheritance means that the new class will basically have the same attributes and methods as the superior class. The concept of inheritance and deriving of new classes from existing classes is e.g. provided by the "extend" statement in JAVA^{®}.

On the other hand, a new derived class may also contain new elements (e.g. new attributes and/or new methods), and there is also the concept of polymorphism. Polymorphism means that the method of a superior class may be over-written in the derived class, or over-loaded. Over-writing means that the method of the superior class is replaced by a method having the same name, but having a different content. In other words, if a method of a specific name is invoked for a certain object, then the procedure defined for said method in a superior class is executed for all objects of derived classes in which said method was not over-written, and a different procedure is executed for all such objects that belong to derived classes, in which said method was over-written, although the method of the same name was invoked. In other words, the same method may appear differently for different objects. This is the root of the term "polymorphism".

Over-loading a method means that there are several variations of a method in a derived class, which have the same name, but have a different structure of arguments, such that they may be discriminated in accordance with their argument.

A further feature of object-orientation is that of so-called messages, where a message is a mechanism that allows communication between individual objects. In other words, one object sends a message to another object, where the message may result in an answer containing a specific return value. Therefore, in object-orientation a program will typically itself be an object that sends messages to other objects in order to obtain certain results from said other objects. In accordance with the concept of encapsulation, the only way to manipulate attributes of other objects is to send messages invoking specific methods of the class to which the destination object belongs. It may be noted that methods of a class can also be encapsulated, namely that these methods cannot be invoked from the outside (i.e. by a message from another object), but are only invoked by other methods of the same class.

Due to the above-described features of object-orientation, a higher flexibility is provided for generating computer programs. Namely, it is especially possible to reuse certain classes when writing a new computer program. In this respect, it may be noted that to make use of the flexibility of object-orientation, an advantageous and appropriate definition of a class hierarchy is necessary. In other words, one will typically define very general classes and then derive a hierarchy of ever more specific classes in order to solve a specific problem. Each class is typically stored as an individual file containing the code defining the class. Then, especially the more general classes can be reused in a new computer program, e.g. by appropriately binding them into the new program with an appropriate default procedure, or by simply copying the entire code of the class into the new program. In this connection, it may be noted that very general classes for which no objects at all are generated, but which only serve as a basis for deriving more specific classes, are called abstract classes. An example of this is provided by the JAVA^{®} programming language, in which there exists a class from which all other classes are derived, where this mother class has the name "object".

An example where object-orientation is very useful, is when creating dynamic internet/intranet pages (generally: network pages), where there are some tasks which appear over and over again, like a customer filling out a form, then some checking being done for the form (e.g. if the customer has filled in every field), whereafter the page is submitted if the form is correctly filled out, and otherwise the form is presented again to the customer so that he can correctly fill out the form. It is known to separate the so-called model (i.e. the actual application), the view (i.e. the way the application is presented to the user), and the controller (i.e. how the process is controlled) into separate objects, in order to reuse such code. For example, one object could be a specific view, e.g. a table of data, and this specific view could be used by a plurality of different applications or programs, such that no reprogramming is necessary.

It is therefore desirable to provide object-oriented features in programs, even if the programming language in which the program is coded does not by default provide such object-oriented features. An example of such a programming language is the Microsoft Visual Basic scripting language (which will be referred to as VBScript in the following). Namely, when creating dynamic network pages with Microsoft Active Server Pages (also referred to as MS ASPs in the following), such ASPs must be prepared in accordance with VBScript. However, although the version 5.0 of VBScript adds the features of a so-called class statement and a class object, VBScript does not provide polymorphism. This leads to inflexibility in connection with generating MS ASPs. It may be noted that VBScript is naturally only an example of a programming language to which the invention described in the following may be applied, and the invention can in fact be applied to any arbitrary programming language.

It is desired to generally provide a method for implementing polymorphism in computer programs programmed with arbitrary programming languages, especially in a programming language that does not by default provide the feature of polymorphism.

### Summary of the present Invention

Such a method is provided by claim 1. Advantageous embodiments are described in the dependent claims.

One advantage of the present invention is the possibility of implementing polymorphism in a programming language that by default does not provide polymorphism.

According to the present invention, for enabling a given class method in a specific class to be over-written in classes derived from said class, a method over-write determination procedure is associated with this method by including said method over-write determination procedure in a method defining code piece belonging to the given method.

For over-writing the given method in a class derived from the specific class, a method over-write identifier is associated with the derived class, where the method over-write identifier identifies the given method being over-written, and an over-write method is associated with the derived class, where the over-write method over-writes the given method of the specific class.

Preferably, the method over-write identifier is included in a class description code piece of the derived class. In other words, the over-write identifier is associated with the derived class in this way. The description code piece in turn preferably comprises a declaration of a class description array, where the class description array contains the over-write identifier. A typical example of an over-write identifier is simply a string that corresponds to the name of the over-written method.

The method over-write determination procedure is arranged in such a way that upon invocation of the given method for a given object, it is determined if the class to which the object belongs is associated with a method over-write identifier that identifies the given method, whereupon the given method is executed for the object if the class to which the object belongs is not associated with a corresponding method over-write identifier, and on the other hand an over-write method associated with the class to which the object belongs is executed if the class to which the object belongs is associated with a method over-write identifier identifying the given method.

On the basis of this method over-write determination procedure, upon invocation of the given method of the specific class, either the given method is executed, or an over-write method in a derived class.

The step of including the procedure can be done by explicitly placing a code block containing the procedure into the method defining code piece, or by using an appropriate include command for referring to the procedure (e.g. the 'include' option known for ASPs, which copies the source code of the file referred to, into the file using the 'include' option).

According to a preferred embodiment, the method over-write identifier is included in a class description code piece, and the class description code piece is included in a class defining code piece, while the method over-write determination procedure is included in a method defining code piece, and said method defining code piece is included in another class defining code piece, namely defining the class for which the over-writing of a given method is to be enabled in classes derived therefrom. More preferably, the above-described class defining code pieces are bound into a program being generated. This program in turn is preferably executed on a server in a network, where the programming language used for generating the program is a scripting language, preferably the Visual Basic Scripting language. In the context of the Visual Basic Scripting language, an object (in the sense of object-orientation) is preferably defined by an array consisting of Visual Basic Dictionary object and a class description array. It should again be noted that although the method of the present invention can be advantageously applied to VBScript, the invention is by no means restricted thereto and can be applied to any arbitrary programming language.

According to another preferred embodiment, the name given to the over-write method is determined by combining a predetermined string with the name of the given method being over-written.

### Brief description of Figures

Embodiments of the present invention shall now be described, in conjunction with the appended figures, in which:
- Fig. 1: shows a schematic diagram explaining an embodiment of the present invention;
- Fig. 2: shows a flow chart illustrating a method over-write determination procedure according to an embodiment of the present invention; and
- Fig. 3: shows a flow chart illustrating an embodiment of a programming method according to the present 10 invention.

### [Detailed description of embodiments]

The present invention shall now be described in conjunction with specific embodiments. It may be noted that these specific embodiments serve to provide the skilled person with a better understanding, but are not intended to in any way restrict the scope of the invention, which is defined by the appended claims.

If a given method in a given class is to have the capability of being over-written in a class derived from said given class, then a method over-write determination procedure is associated with the given method. On the other hand, according to an embodiment of the invention, if a method defined in a superior class is to be over-written in a class derived from said superior class, then a method overwrite identifier is associated with the derived class, and an over-write method (i.e. a method that over-writes the method of the superior class) is associated with the derived class.

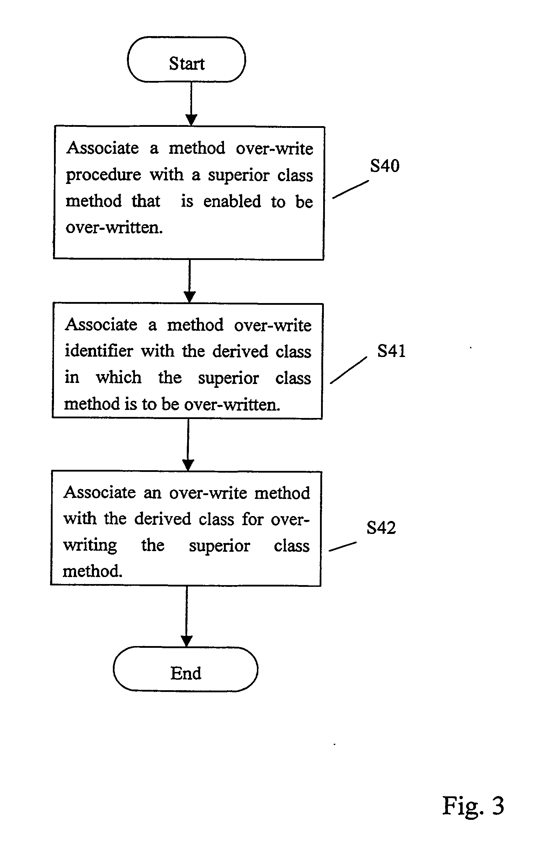

An example thereof is shown in Fig. 3. In the example of Fig. 3, steps are shown for performing the above mentioned basic programming method, where it is assumed that one superior class method is to be adjusted such that it may be overwritten, and then an over-write method for over-writing said superior class method is to be implemented in a class derived from said superior class. In a first step S40 a method over-write procedure is associated with a given superior class method, such that this superior class method may be over-written in a derived class. Then, in step S41, a method over-write identifier is associated with a given derived class in which it is intended to over-write the superior class method, and in step S42 the over-write method that is intended to over-write the superior class method is associated with the derived class.

It should be understood that the method illustrated in Fig. 3 is only an example, and that e.g. the shown steps may also be arranged in different order. Also, more than one superior class method may be over-written, and more than one superior class method may be arranged to be over-written. Furthermore, the two distinct actions of on the one hand enabling a class method to be over-written by adding an over-write determination procedure to it, and on the other hand over-writing a superior class method in a derived class by associating an over-write identifier and an over-write method with the derived class, are not necessarily conducted in conjunction when writing a specific program. Namely, it is possible that a programmer will define a new class and enable one or more of the methods to be over-written, without in said specific program then actually over-writing any of said methods in derived classes. However, due to the fact that these methods carry the option of being over-written by appropriately using an over-write identifier, one has the feature of polymorphism, which may e.g. be employed when reusing the thus defined class in the context of a new program, in which it might then be desirable to over-write one or more of the methods.

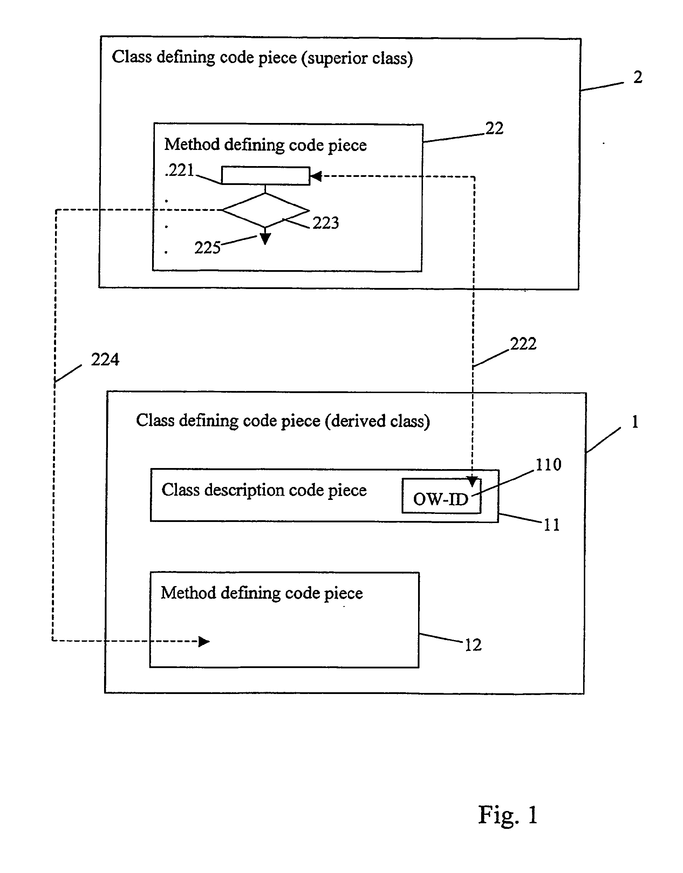

Fig. 1 shows a schematic example of an embodiment of the present invention. Reference numeral 2 refers to a class defining code piece belonging to a superior class, i.e. a class from which further classes may be derived. The term code piece refers to one or more lines of code, where a class defining code piece is such a code piece that contains information for defining a class. The details of such a class defining code piece will naturally depend on the specific programming language used. Examples of specific programming languages will be given further on.

Reference numeral 22 refers to a method defining code piece in class defining code piece 2. The method defining code piece comprises lines of code that contain information for defining a method that belongs to the class defined in class defining code piece 2. The method defining code piece contains a method over-write determination procedure, which will be explained in more detail further on, in conjunction with other parts of Fig. 1.

Fig. 1 furthermore shows a class defining code piece 1 belonging to a derived class with respect to the class defined in code piece 2. Class defining code piece 1 contains a class description code piece 11. The class description code piece is a piece of code that contains information describing the class defined in code piece 1. In the example of Fig. 1, the class description code piece 11 contains an over-write identifier 110, which is associated with an over-write method coded in a method defining code piece 12.

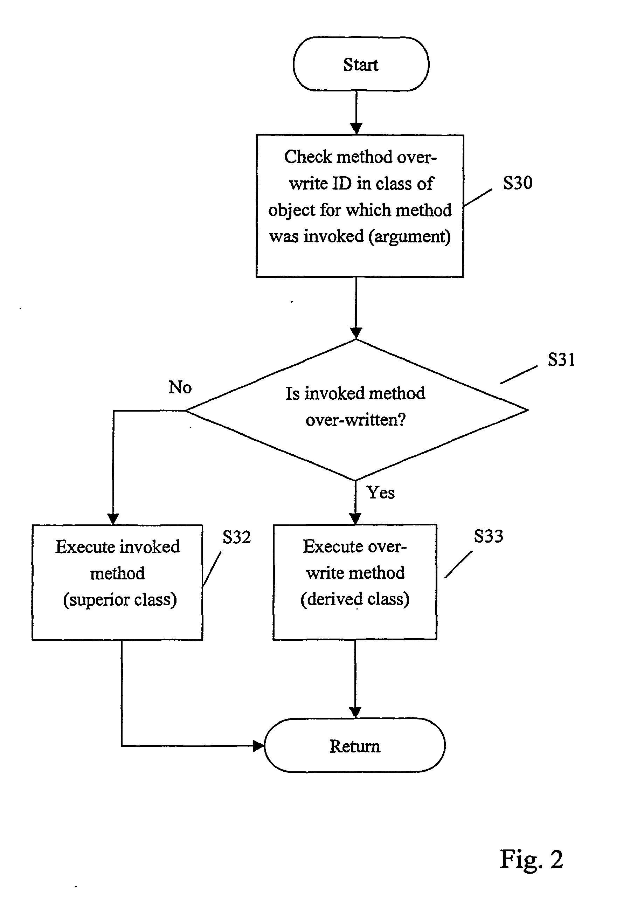

A method of programming in accordance with the present invention will now be explained in connection with Figs. 1 and 2.

When the method defined in method defining code piece 22 is invoked, where this invocation will typically indicate an object for which the method is to be invoked, e.g. where the object is an argument being handed over with the method call, the method defining code piece 22 is arranged to perform a method over-write determination procedure. The method over-write determination procedure checks if a method over-write identification is present in the class of the object for which the method was invoked (step S30 in Fig. 2). This is also indicated by box 221 and arrow 222 in Fig. 1. More specifically, the method over-write determination procedure checks if the method defined in method defining code piece 22 is identified by the over-write ID 110 in class description code piece 11 of the derived class defined in class defining code piece 1, where this class defined in class defining code piece 1 is the class to which the object for which the method in method defining code piece 22 was invoked belongs.

Then a determination is made (indicated as step S31 in Fig. 2 and branching 223 in Fig. 1), if the invoked method is over-written. Namely, the method is over-written if the method defined in method defining code piece 22 is identified by over-write ID 110.

It may be noted that Fig. 1 only shows one over-write identifier, but in fact it is possible that the class description code piece 11 contains no over-write identifier, which signifies that no method is over-written in the class defined by class defining code piece 1, or several over-write identifiers are present in the class description code piece 11, which signifies that several methods are over-written, where said several over-written methods may belong to a single superior class, or to multiple superior classes.

If the method defined in method code piece 22 is over-written, then the process of Fig. 2 branches to step S33, namely that the over-write method defined in method defining code piece 12 of the derived class is executed, which is also indicated by arrow 224 in Fig. 1. On the other hand, if the invoked method (the method defined in method code piece 22) is not over-written, then the method defined in method defining code piece 22 is executed, as indicated by arrow 225 in Fig. 1 and by step S32 in Fig. 2.

In this manner, when the method defined in code piece 22 is invoked, either the method actually defined in code piece 22 is executed, or the method defined in code piece 12 is executed, depending on the over-write identifier 110 in class description code piece 11. In other words, invocating the method defined in code piece 22 can lead to the execution of different procedures for different objects, which in other words means that polymorphism is provided.

It may be noted that although the example described in connection with Fig. 1 and Fig. 2 is preferred, it is by no means restrictive. Namely, it is not necessary to embed the respective code pieces in associated class defining code pieces, although this has the advantage of programs being organised better and being easier to read.

Typically, the over-write identifier 110 will simply be the name of the over-written method, i.e. the method defined in code piece 22. Although this is preferable for its simplicity, it is naturally possible to implement other identification schemes using any type of suitable indicator. Equally, it is preferable that the calling of the over-write method defined in code piece 12 be done on the basis of the name of the corresponding method, by combining the name of the over-written method (the method in code piece 22) with a predetermined default string and then using the convention of naming the method defined in code piece 12 by the name generated in such a way, e.g. by simply adding the above-mentioned string to the name of the method in code piece 22. This again has the advantage of simplicity, but other schemes are possible, e.g. it would also be possible to add a supplementary identifier to identifier 110, such that the step associated with reference numeral 223 and S31 becomes more complicated in that it on the one hand identifies if the method of code piece 22 is over-written, and if this is the case, then calls the method (the over-write method) identified in conjunction with identifier 110.

An object as specified above in conjunction with the present invention is any entity that is capable of identifying the values of the attributes of said object, and identifying the class to which said object belongs. This can again be done in any desired or appropriate way, e.g. by simply constructing an array that on the one hand contains the values of the attributes, and on the other contains a class identifier, such as the name of the class. Naturally, more complicated schemes are possible, such as those using pointers.

Now detailed code examples shall be given for a preferred implementation of the method of the present invention.

The following code examples are based on VBScript, which is a preferred application of the present invention. Also, for a better understanding, sometimes comparative code examples in JAVA^{®} will be given. Moreover, the example described in the following will be given in the context of MS ASPs.

It may be noted that details regarding the various commands, default elements and general structure of VBScript can be looked up in any appropriate technical digest, such as e.g. in "VBScript Programmer's Reference" by Adrian Kingsley-Hughes et al., 1st edition October 1999, Wrox Press Inc., ISBN 1861002718. Therefore, a complete repetition of the various elements of VBScript is not necessary here. Equally, details of Active Server Pages may be looked up in any appropriate reference digest, e.g. "Professional Active Server Pages 3.0" by Alex Homer et al., 3rd edition, September 1999, Wrox Press Inc., ISBN 1861002610, such that a complete repetition of details is not necessary here.

Furthermore, the following description will make reference to a set of appended code examples referred to as Class.inc, Object.inc, ShowTableView.inc, and ShowTablePageView.inc. These code examples are integral parts of the present invention disclosure.

In accordance with the presently described embodiment, two sets of functional entities are defined, which shall also be referred to as classes in the following. Namely, a base class for objects from which all other objects are derived is defined, which is the class having the name "object", and which is included in the appended code examples as Object.inc. Furthermore, a class which describes all objects of a given class is defined, namely the class having the name "class", see Class.inc in the appended code examples.

An object basically stores two types of information, namely the class it belongs to and its data (the values of its one or more attributes). The class is preferably represented as a one-dimensional array, and the data as a dictionary object (as provided by VB Script) that maps class-attribute names to their respective values.

The class information in turn consists of the name of the class, the names of the methods of superior classes which are over-loaded in this class, and the class description of the superior class or super class. With this information, an object can encapsulate data (in its dictionary object) and inherit data from super classes (namely the super classes' entries in the same dictionary).

A new class is basically a set of functions with every function having the class name as prefix, and every method (except for constructors and static methods) of the class having the class-instance as a first parameter. To give an example, the JAVA^{®} class

```
     public class Test

    {
     public Test() { }
     public void methodA( ) { }
     }
```

in accordance with the present embodiment of the invention basically looks like:

```
    // class description
    Dim TEST_CLASSDESCRIPTION
    TEST_CLASSDESCRIPTION = Array( "Test", Array(),
    OBJECT_CLASSDESCRIPTION)

    // the constructor needs a class description
    function Test_create( aClassDescription )
     Test_create = Class_newInstance( aClassDescription )
    end function

    // the method "methodA" needs the object of class "Test"
    sub Test_methodA( aTestObject)
    .
    .
    .
    end sub
```

As can be seen, this example of a class defining code piece first contains a class description code piece. The statement "Dim" is simply a declaration. Then the declared variable TEST_CLASSDESCRIPTION is assigned an array having three elements, namely the name "Test", which is the name of the class being described, then an array that is empty in the above example, and the string OBJECT_CLASSDESCRIPTION, which identifies the superior class from which the class "Test" is derived, namely the class "Object" (see object.inc in the appended code examples).

Then, a constructor is defined, where the element "function" provided in VB script is used. As is well known in the field of object-oriented programming, a constructor is a special method in a class that generates an object of that class. In the above example, the constructor is provided by a function Class_newInstance, where aClassDescription is the argument. The function Class_newInstance is defined in the class Class.inc (see appended code examples). In accordance with the well known convention from object-oriented languages, the keyword 'new' is included in the name of the constructor function Class_newInstance, in order to make its purpose clear. As can be seen in the appended coded samples, this function Class_newInstance creates an array having the descriptor handed over as the argument (aClassDescriptor), together with a dictionary object created in accordance with the known specification of VBScript.

Then, the above-shown example of a class defining code piece shows the frame of a method defining code piece, which in the above example is simply a sub routine (as defined by the VBScript statement sub).

The vertical dots between the sub statement and the end sub statement indicate any arbitrary method that is appropriately defined, but which is not the subject-matter of the present application, as the present application is not concerned with these specific contents of individual methods. It suffices to say that in the example the method receives the name Test_methodA and has an object as an argument.

A class that is created in this way can be used via server-side include-commands, e.g. in ASPs <! - - ## include virtual = "/classes/test.inc"-->, where this example presumes that the class (i.e. the above shown class defining code piece) was saved in the file "test.inc". In this way the code of the class "test" is copied into the ASPs currently being processed. Naturally, it is also possible to simply copy the code and paste it into an ASP.

The class information stored in each object offers the possibility to implement polymorphism. This can be seen by taking the example of deriving a class having the name "test2" from the class "test". In JAVA® this would look like

```
Public class Test1 extends Test

     {
    public Test2( ) { super( ); }

    public void methodA( ) { }
    public void methodB( ) { }
    }
```

In accordance with the present embodiment of the invention, the ASP looks like:

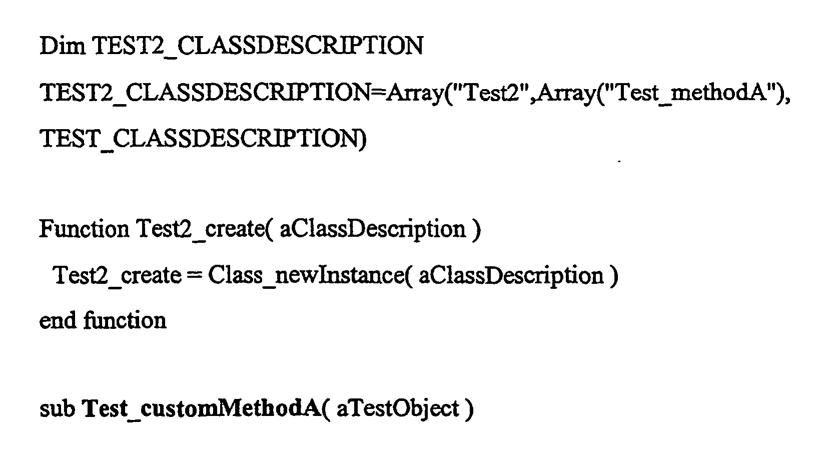

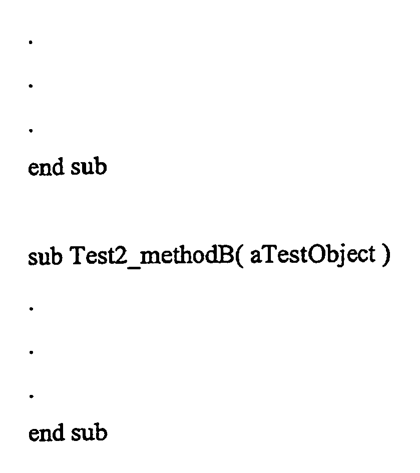

It may be remarked from the above JAVA® example and the VBScript example that the specific example over-writes methodA in class "test2", and adds a new methodB that was not defined in the superior class.

In the VBScript example above one can see that again there is a section of the class defining code piece that first provides a "Dim" statement for declaring variable TEST2_CLASSDESCRIPTION, where then TEST2_CLASSDESCRIPTION is assigned an array containing the name of the class ("Test2"), an array and the string TEST_CLASSDESCRIPTION. As already indicated previously, TEST_CLASSDESCRIPTION identifies that the superior class from which TEST2 is derived is the class "Test". The string "Test_methodA" contained in the array is a over-write identifier that indicates that Test_methodA is over-written in the class "Test2". It may be noted that in a more general example, the array could contain a plurality of such over-write identifiers, e.g. several names of methods of superior classes that are over-written in "Test2". As one can see, the fact that the corresponding array in the class description code piece for the previously described class "Test" is empty, indicates that no methods of classes superior to the class "Test" are over-written in the class "Test".

Then, as can be seen from the above example of a class defining code piece related to class "Test2", the constructor is defined in the same way as the constructor was defined in the class defining code piece relating to the class "Test", such that a further description is not necessary.

Then, the method for over-writing Test_methodA is a sub routine carrying the name Test_customMethodA, i.e. a sub routine having a name derived by combining the name of the method being over-written with a default string, in this case "custom". As will be seen further on, this enables the providing of polymorphism. On the other hand, as can also be seen, the additional method (method B in the JAVA® example) is simply defined as Test2_methodB, similar to the basic definition of Test_methodA in the class defining code piece related to the class "Test".

Now, in order to implement an example of a method over-write determination procedure, the following code piece is introduced into the definition of Test_methodA:

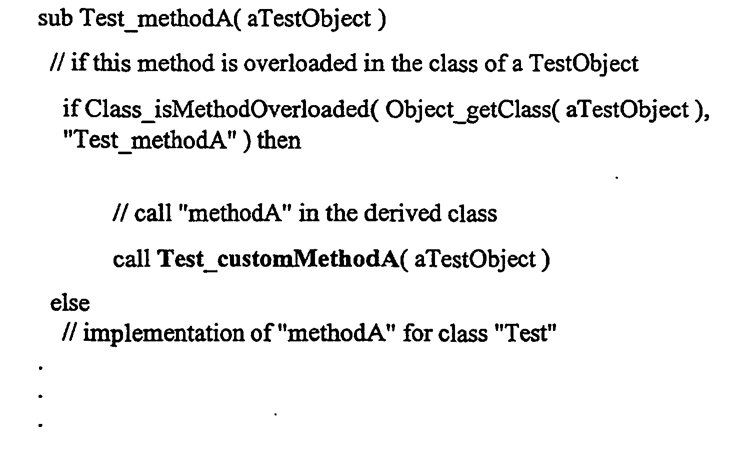

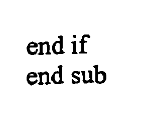

More specifically, this sub routine definition replaces the definition shown above for Test_methodA. As can be seen, there is an additional call for a function Class_isMethodOverloaded, where said function is once again defined in the appended code example, namely in Class.inc. As can be seen, this function Class_isMethodOverloaded returns the value true if the method is overloaded (if the method is named in the corresponding array), otherwise the value false is returned. Then, if Test_methodA is over-written (as shown in the above example), then Test_customMethodA is called, namely the over-write method defined in the class defining code piece that defines the class "Test2". Otherwise, the implementation of Test_methodA is executed, which is defined in the method defining code piece of class "Test". This is a specific example of the above-described more general procedure 223, 224, 225 or S31, S32, S33.

In this example, the naming of over-write methods in derived classes follows the convention of providing the name of the super class, followed by an underscore, followed by "custom" and the name of the over-written method. It is quite clear that the string "custom" could be replaced by any other arbitrary string and that this additional string could be combined with the over-written method name in any desired way. The name of the super class is used, because the base class does not know about the derived classes it will have in the future. In other words, this concept is very flexible. It may be noted that the above approach leads to the limitation that not more than one derived class of a given class can be used in an ASP when the derived classes over-write the same methods of the same super class. On the other hand, the above-proposed approach is very simple. In the context of the preferred application to ASP, or to Web applications in general, where a computer program only consists of a small number of pages, this limitation is in fact of very little importance, and practical examples, as the ones shown in the appended code examples, never led to any problems.

Preferably the above-described concept is applied to the creation of models, views and controllers for Web-based applications. The appended code examples give two specific examples, namely the files ShowTableView.inc and ShowTablePageView.inc. In this respect it may be noted that the class ShowTableView.inc is used to display a database table at an HTML-table. The appended example also shows how the class would be used in an ASP. The class ShowTablePageView.inc is a view that also displays a table, but segments the table into several pages that the user can leaf through. It is included to show how a derived class is implemented.

Although the present invention has been described on the basis of detailed examples, the detailed examples only serve to provide the skilled person with a better understanding, and are not intended to limit the scope of the invention. The scope of the invention is much rather defined by the appended claims, where reference numerals in the claims only serve the purpose of making the claims easier to read, but do not restrict the scope.

### Appended Code Examples

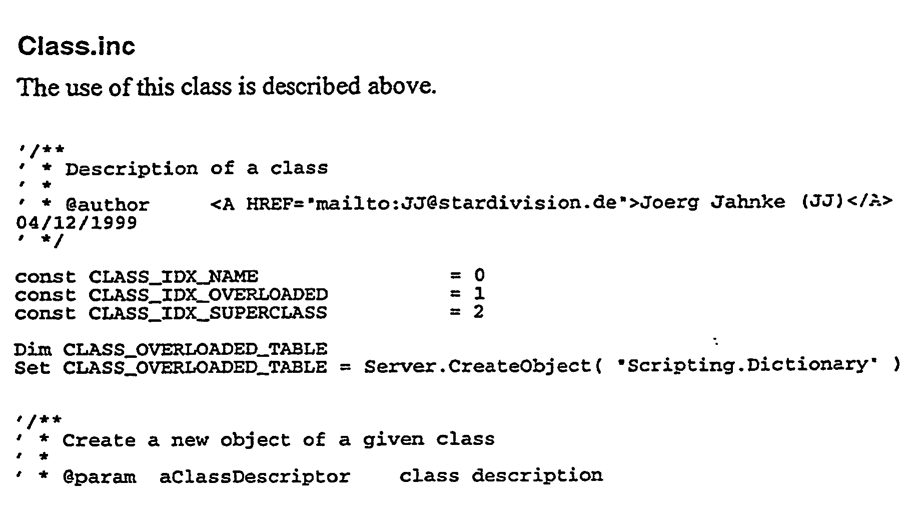

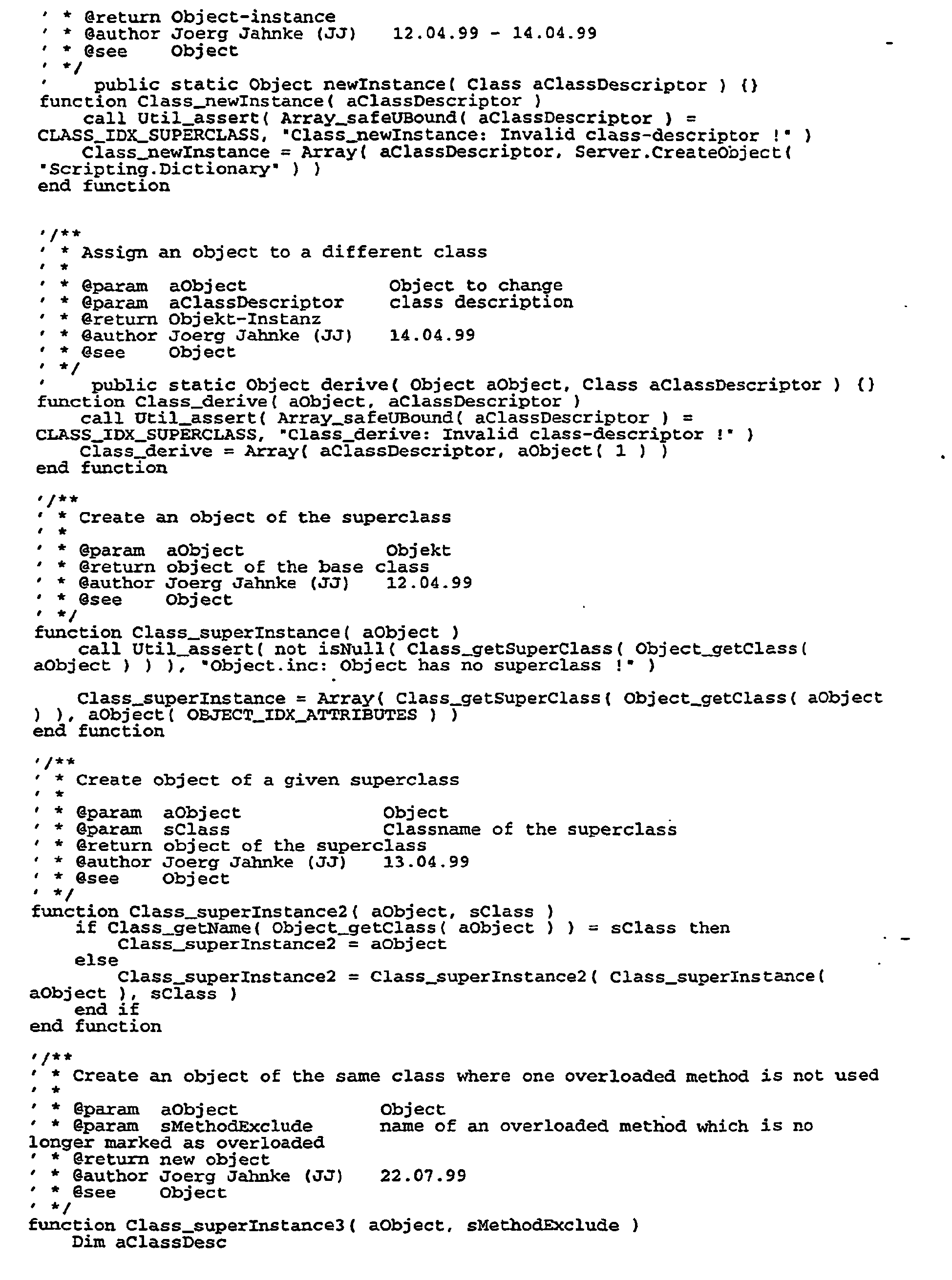

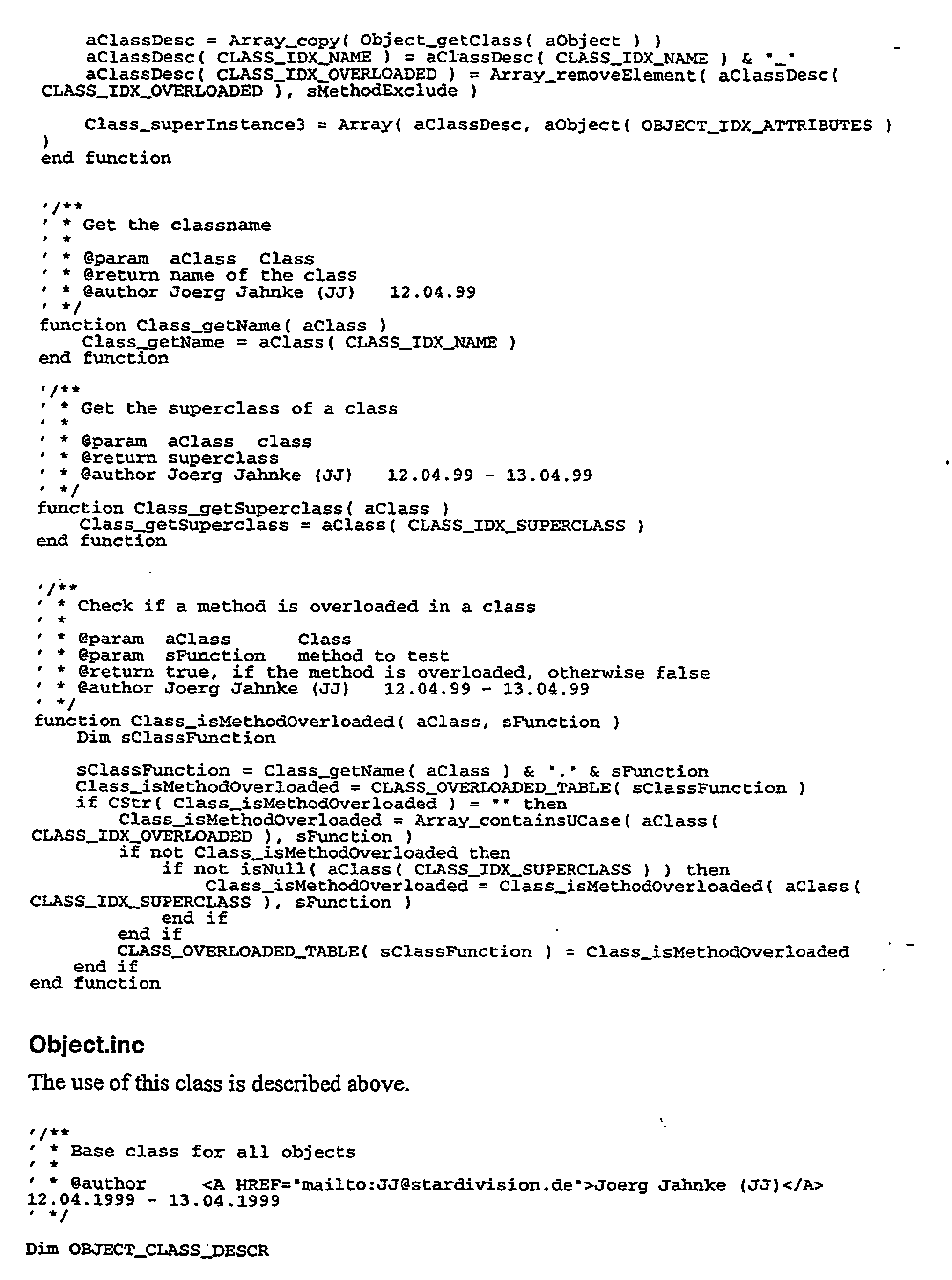

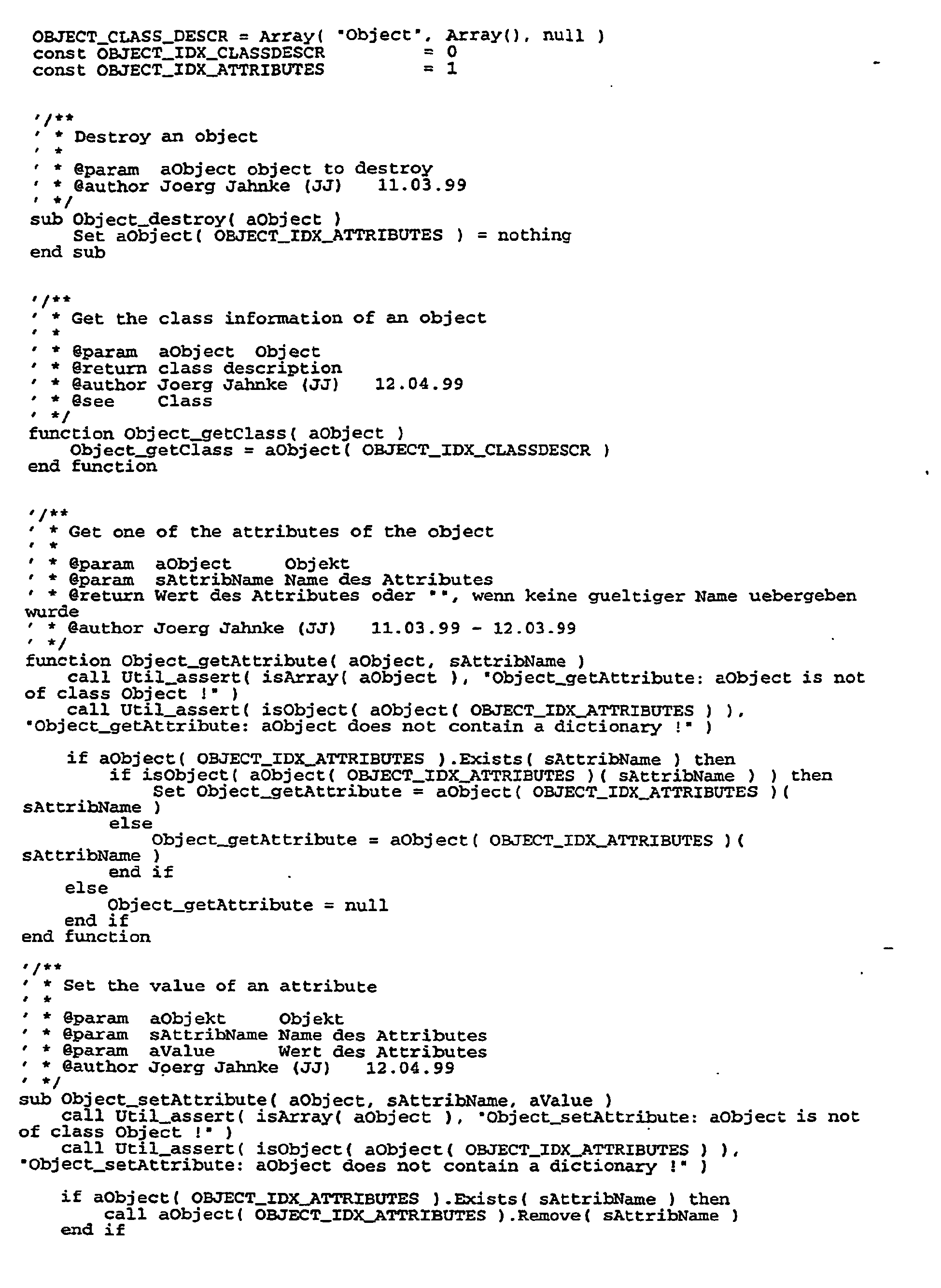

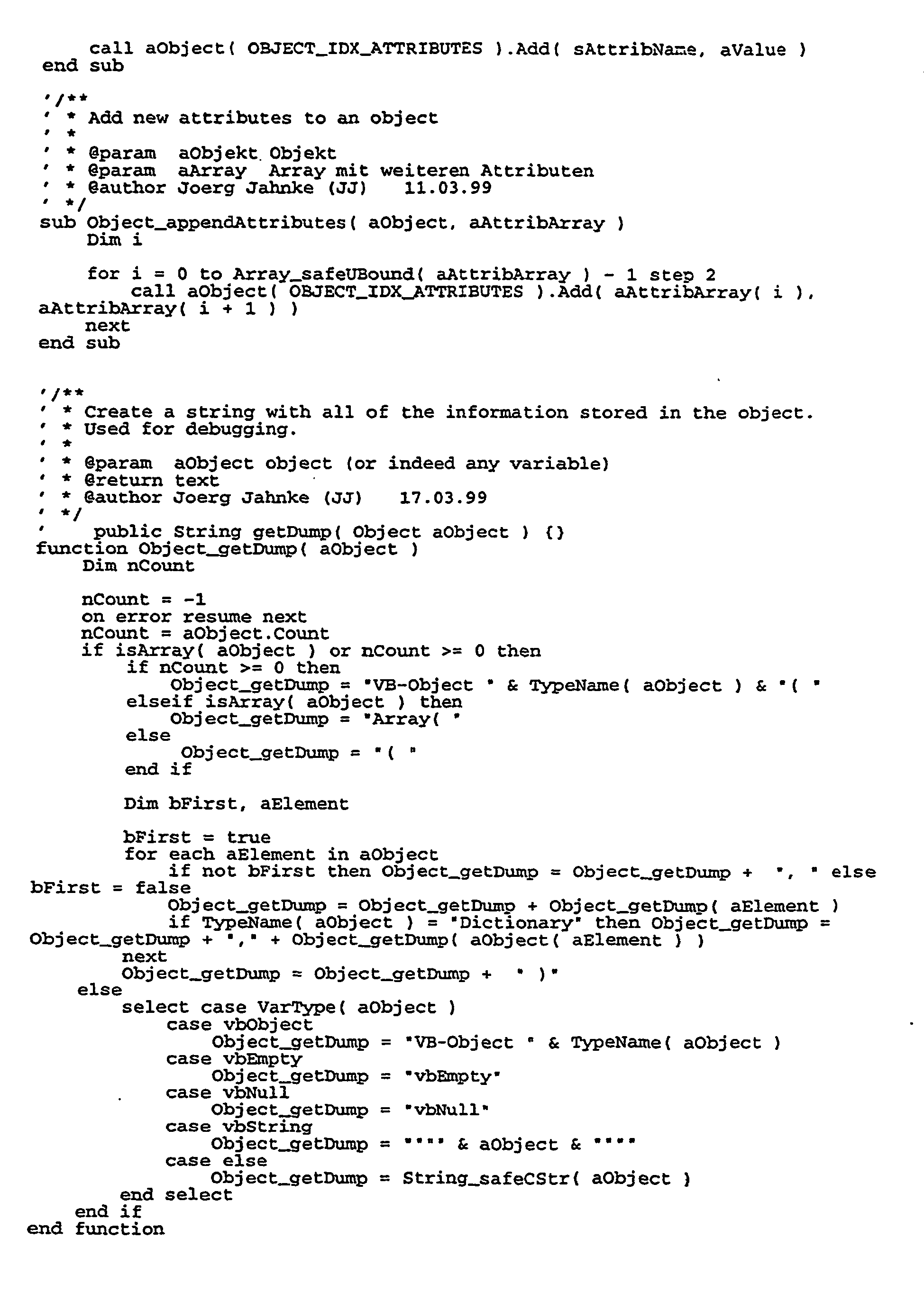

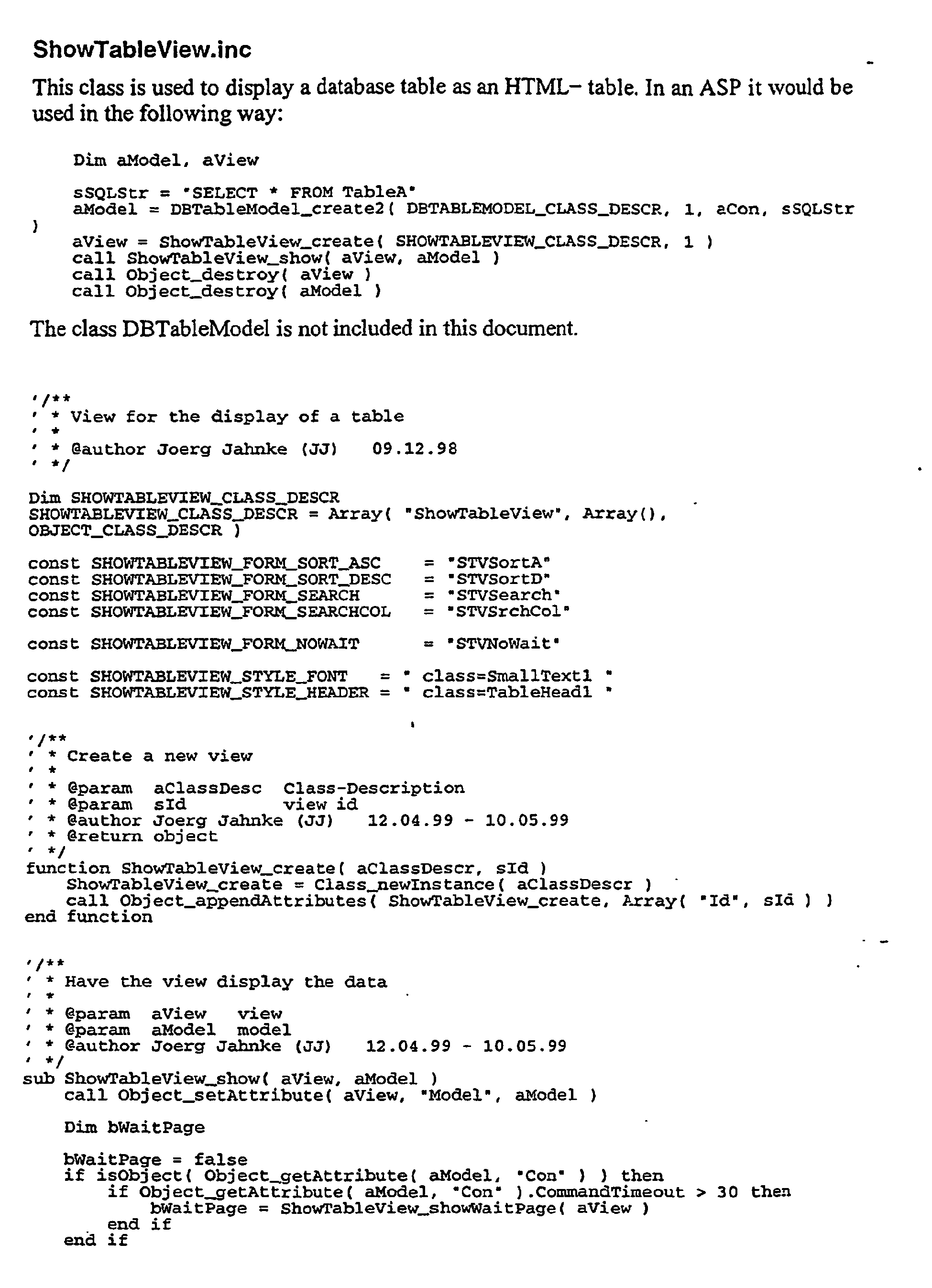

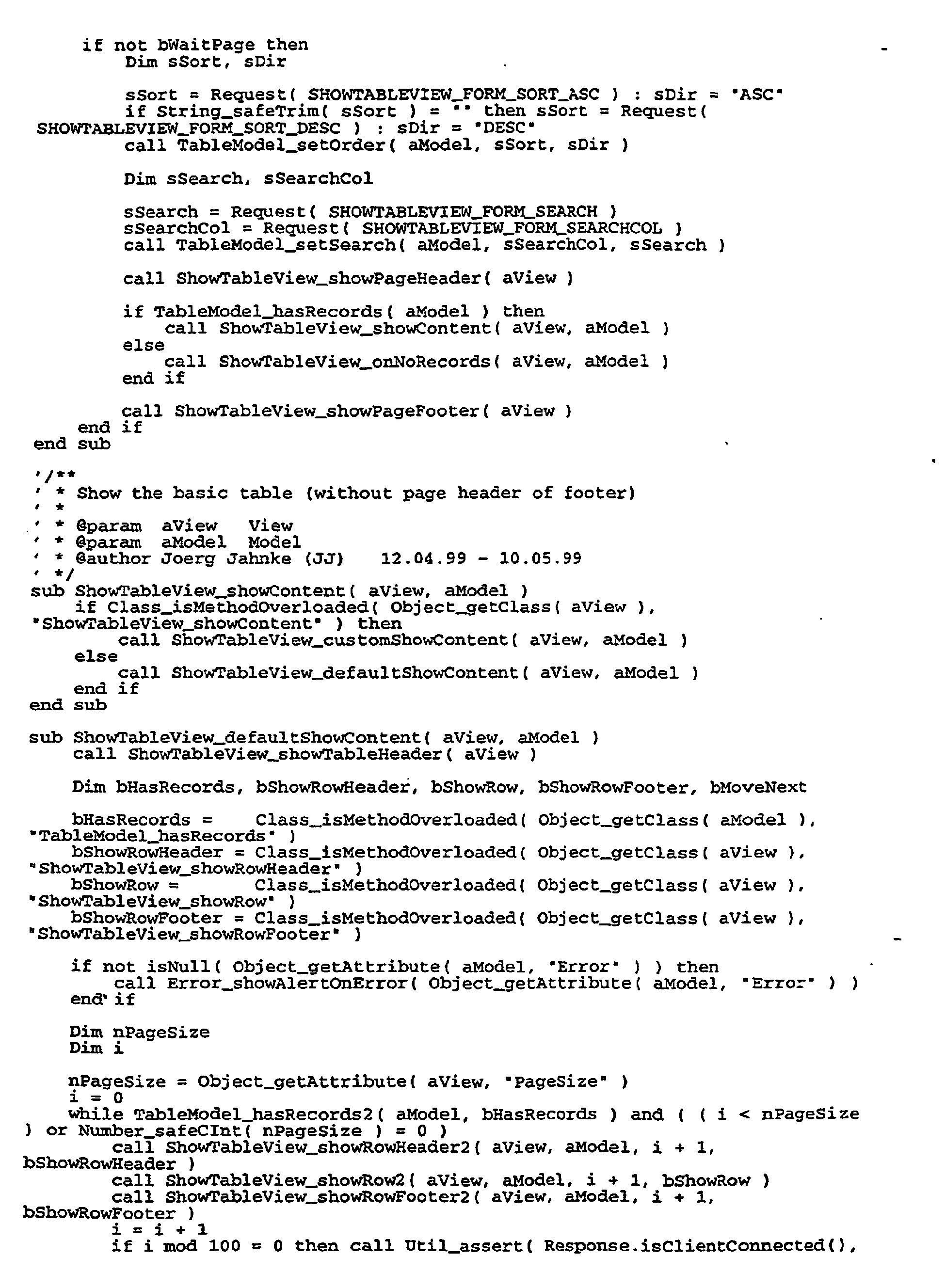

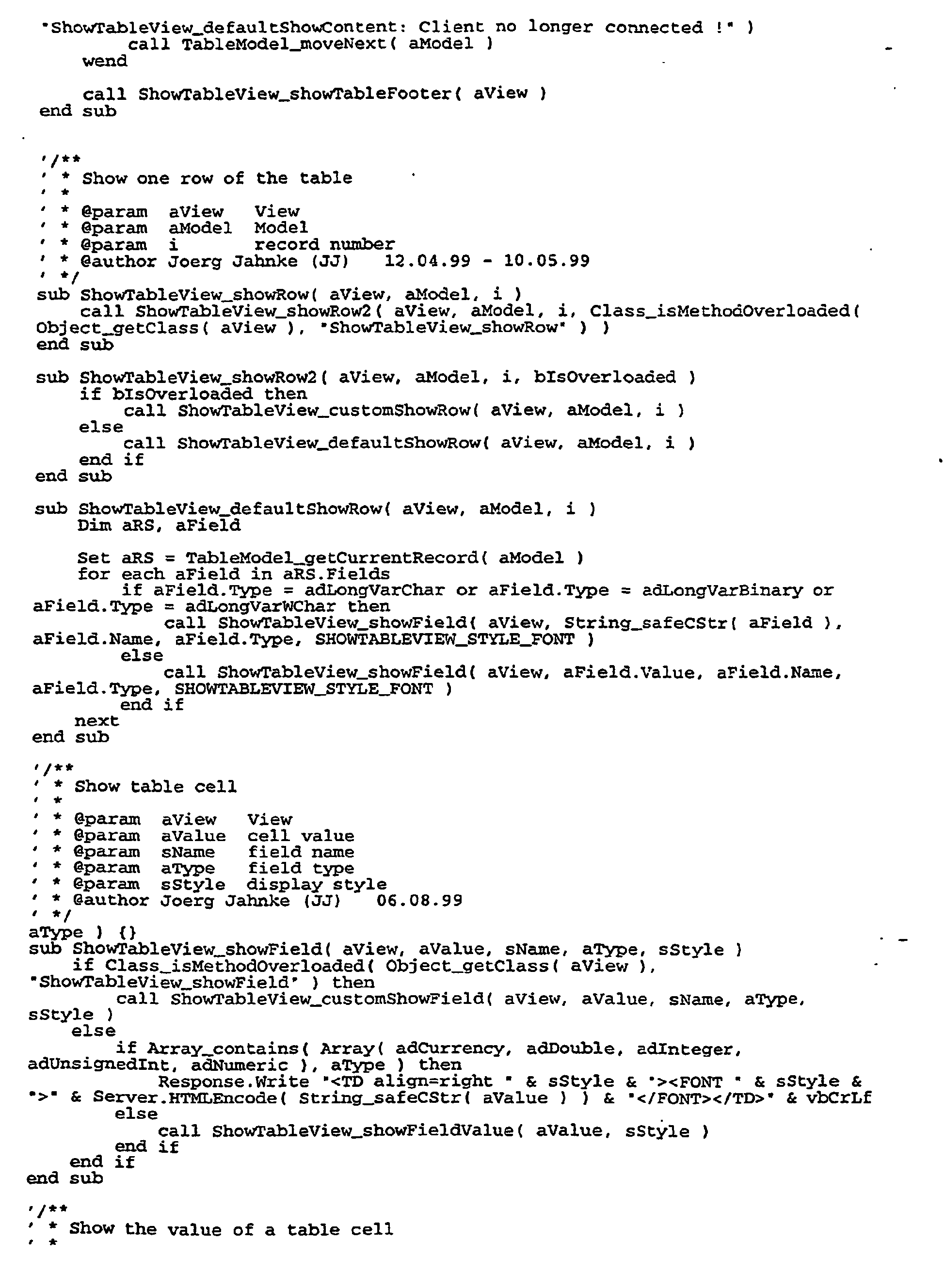

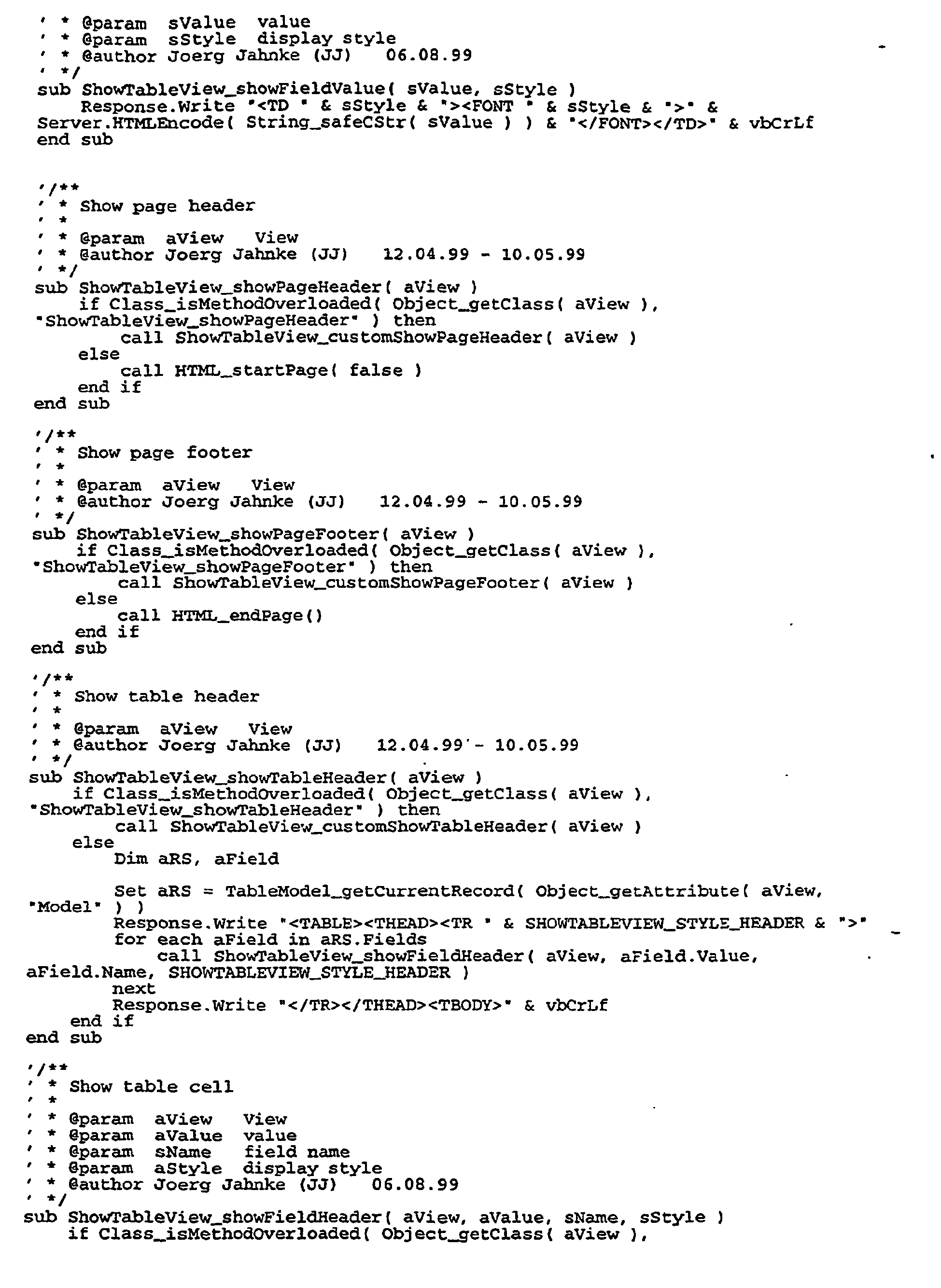

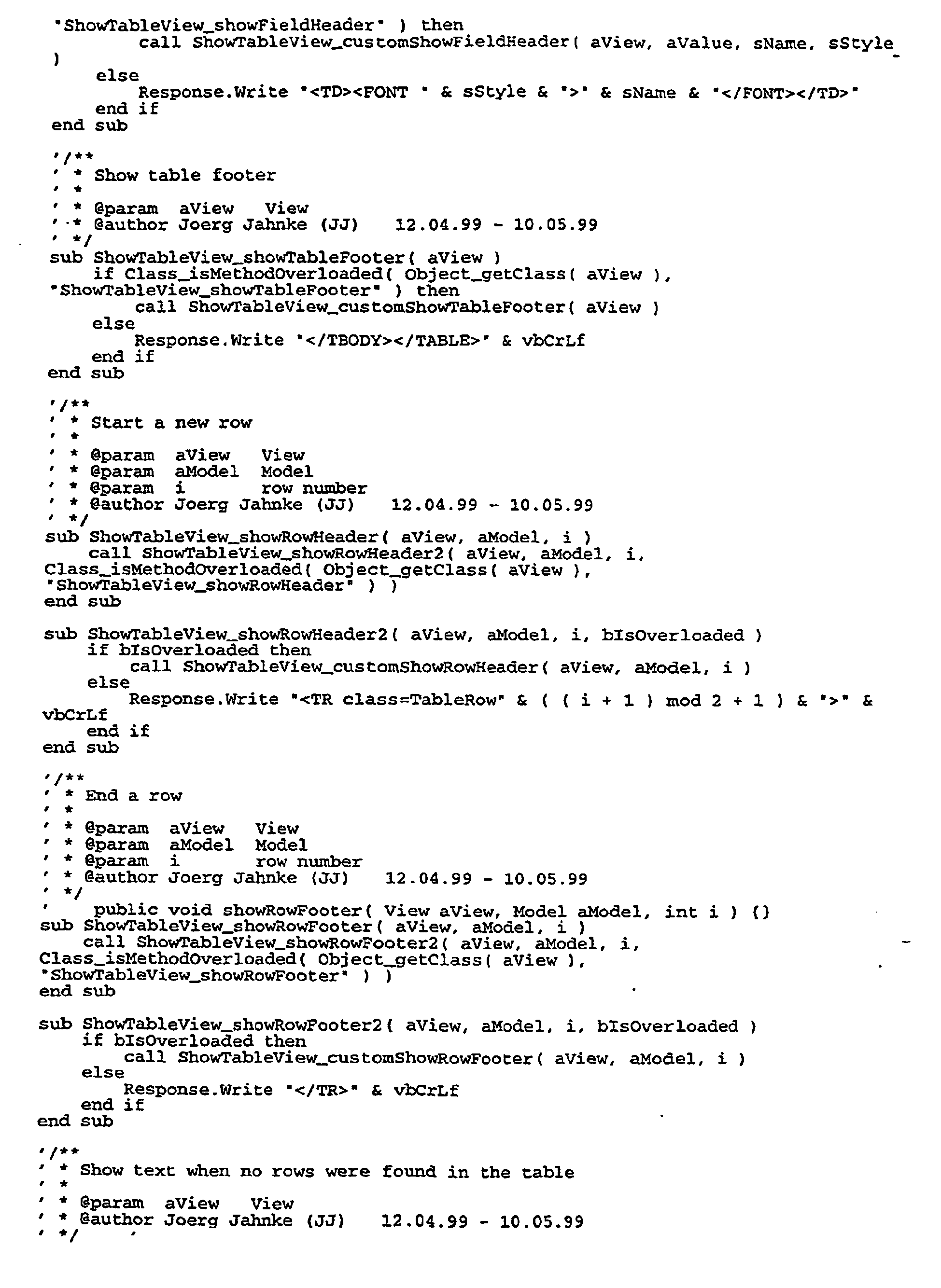

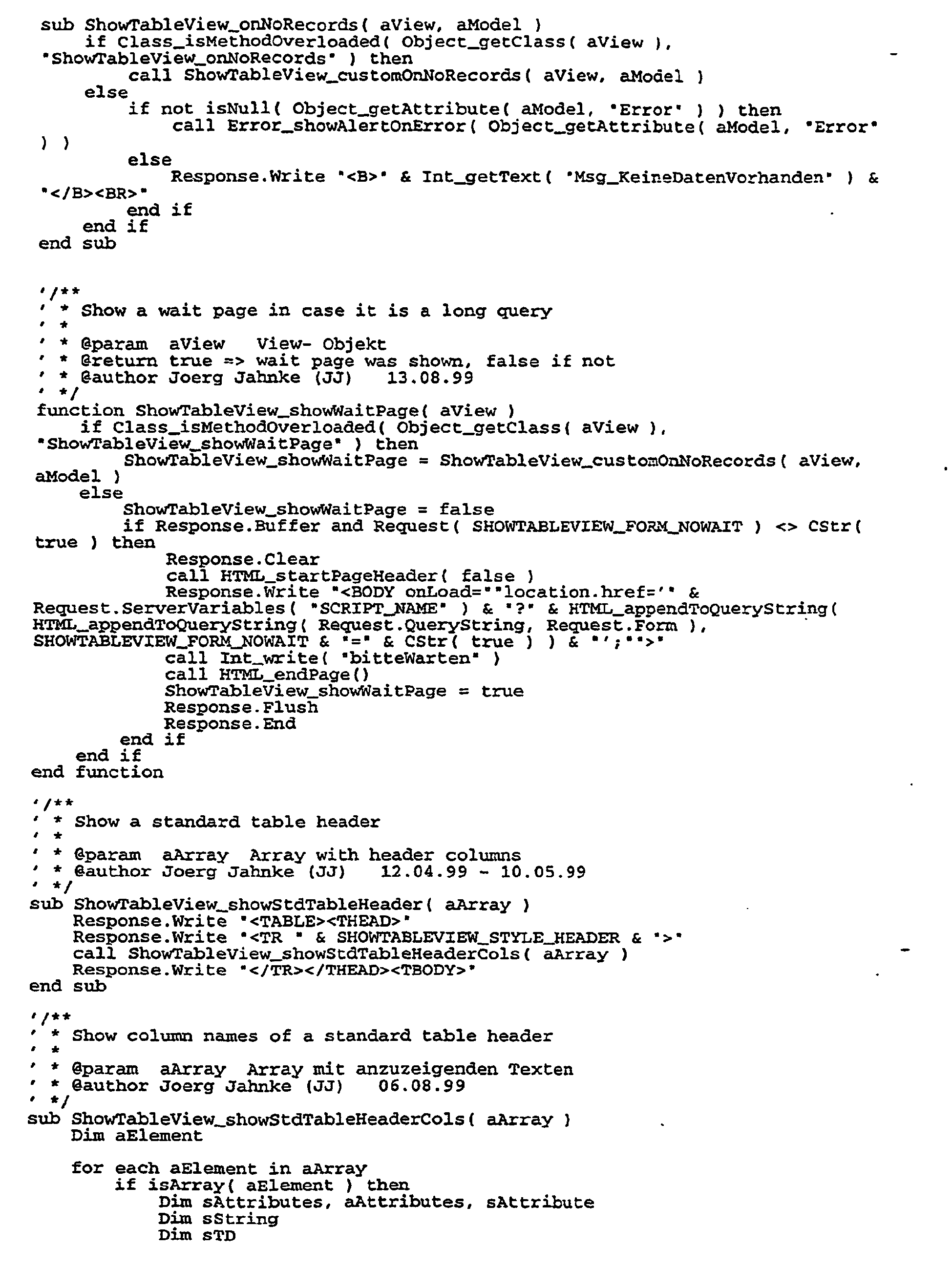

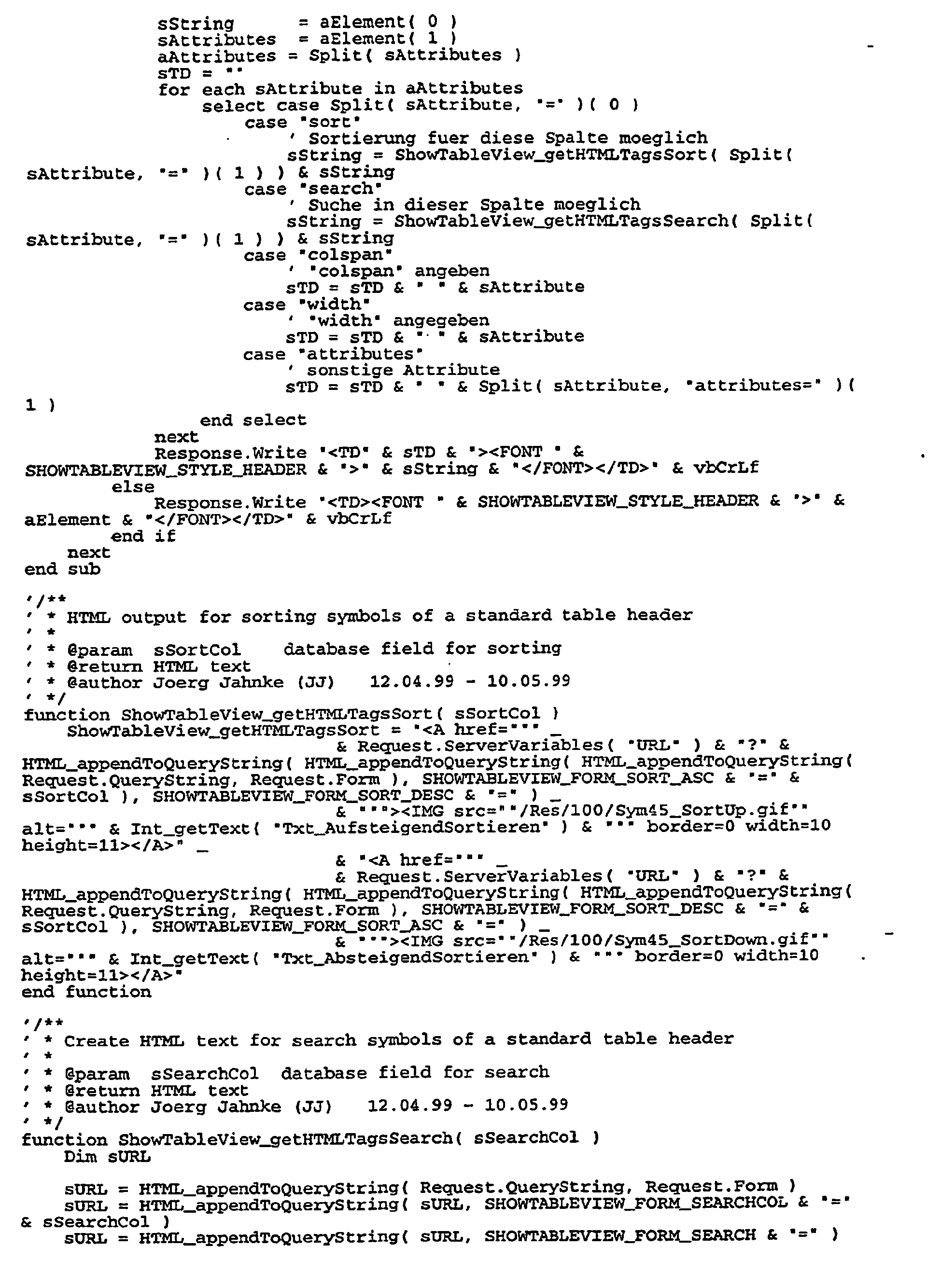

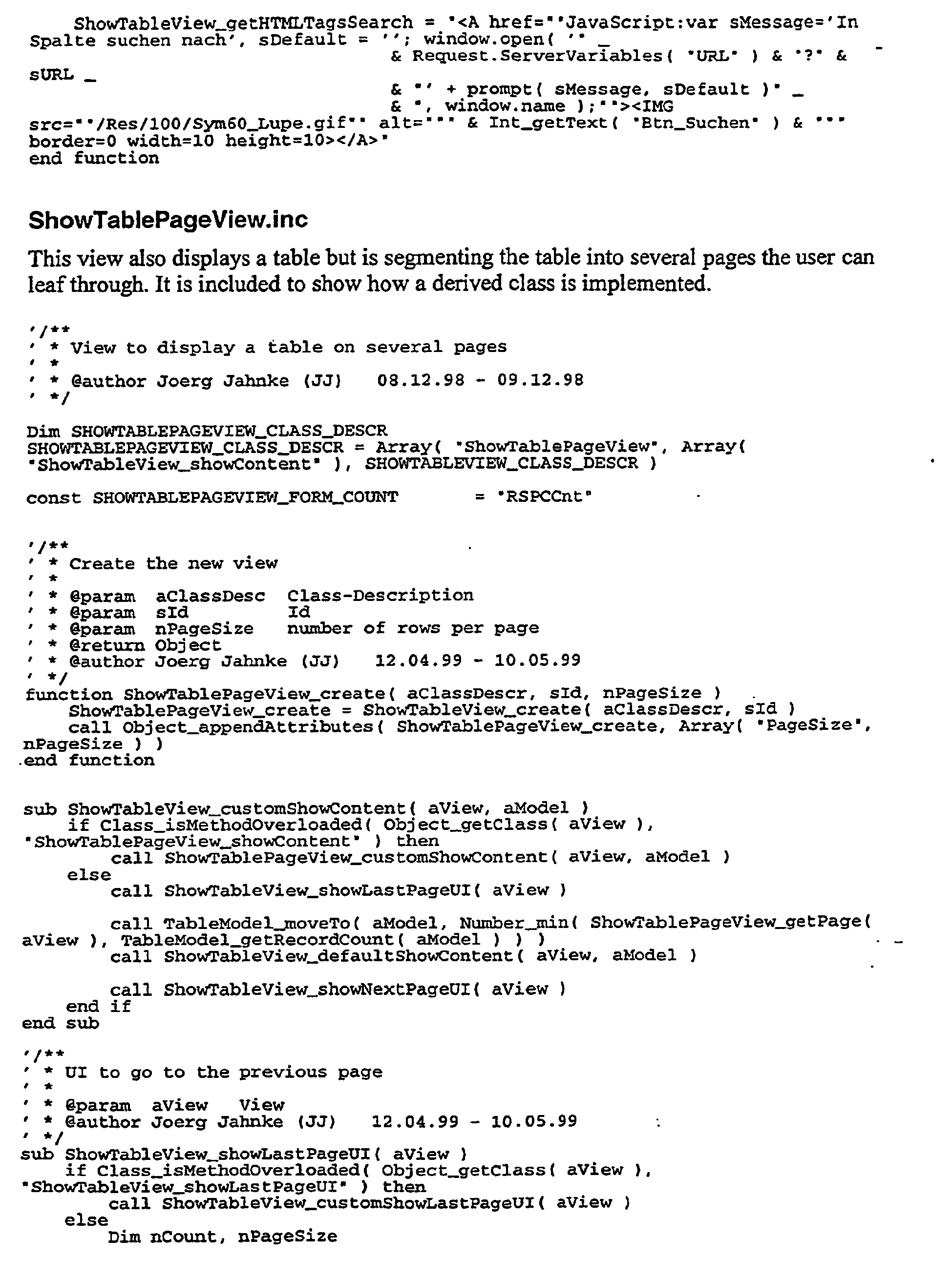

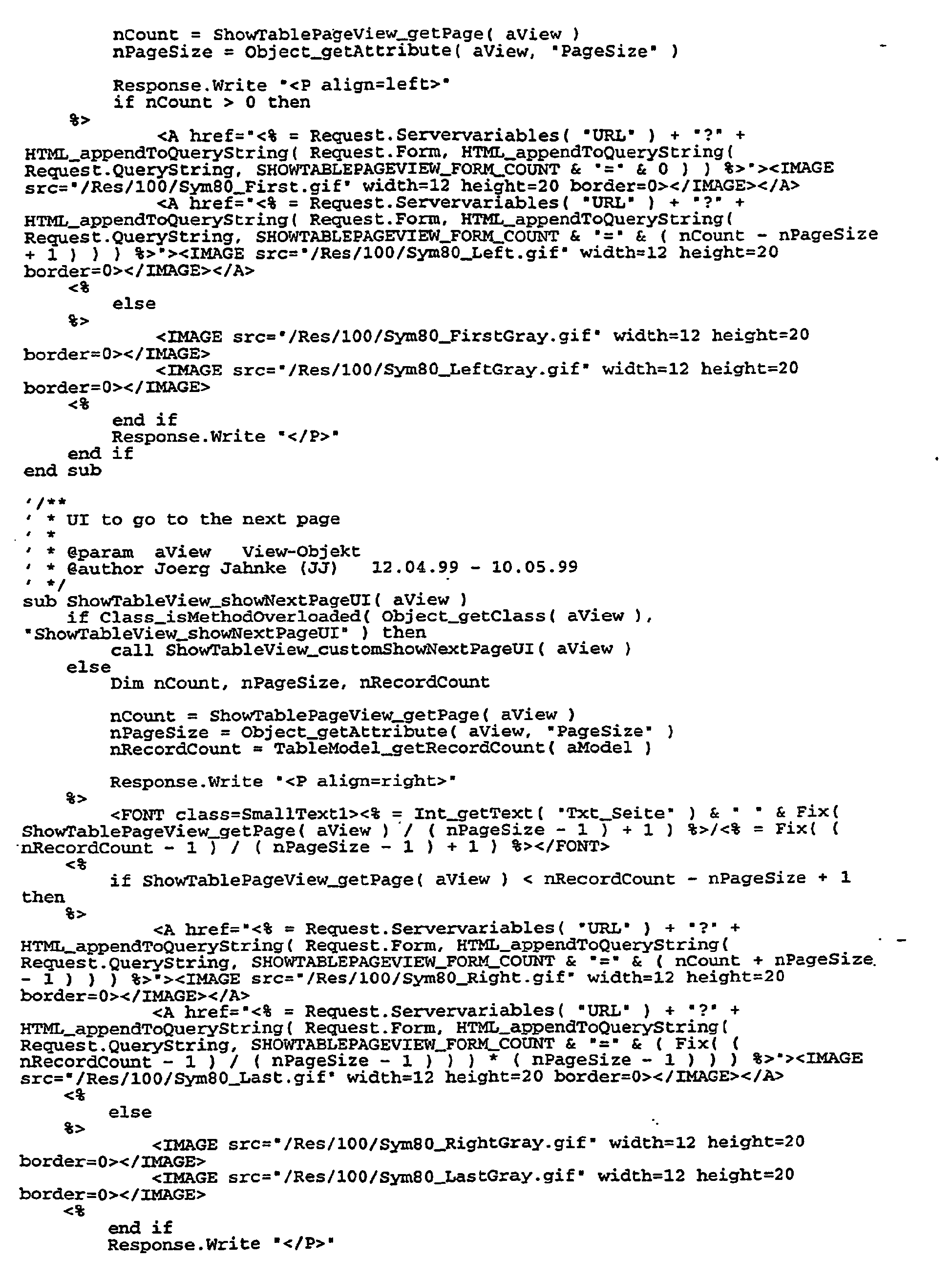

## Claims

1. A method of programming for providing polymorphism in a programming language that by default does not provide polymorphism, in which for enabling a given method in a first class to be over-written in classes derived from said first class, a method over-write determination procedure (221, 222, 223, 224, 225) is associated with said given method by including said method over-write determination procedure (221, 222, 223, 224, 225) in a method defining code piece (22) associated with said given method,
in which for over-writing the given method in a second class derived from the first class
a method over-write identifier (110) is associated with said second class, where said method over-write identifier (110) identifies said given method to be over-written, and
an over-write method is associated with said second class, said over-write method over-writing said given method,
wherein said method over-write determination procedure (221, 222, 223, 224, 225) is arranged
upon invocation of said given method for an object, to determine if the class to which said object belongs is associated with a method over-write identifier that identifies said given method,
to execute said given method for said object, if the class to which said object belongs is not associated with a method over-write identifier that identifies said given method, and
to execute an over-write method associated with the class to which said object belongs for said object, if the class to which said object belongs is associated with a method over-write identifier that identifies said given method.

2. A method according to claim 1, wherein the step of associating said method over-write identifier (110) with said second class comprises including said method over-write identifier (110) in a class description code piece (11) associated with said second class.

3. A method according to claim 2, wherein said class description code piece (11) comprises a declaration of a class description array, where said class description array contains one or more method over-write identifiers (110).

4. A method according to claim 3, wherein said one or more over-write identifiers are strings, each string being the name of an over-written method.

5. A method according to claim 3 or 4, wherein said class description array furthermore contains the name of the class it describes, and the name of the class from which it is directly derived.

6. A method according to claim 2, wherein
said class description code piece (11) is associated with said second class by being included in a class defining code piece (1) defining said second class, and
said method defining code piece (22) is associated with said first class method by being included in a class defining code piece (2) defining said first class.

7. A method according to claim 6, wherein said class defining code piece (1) defining said second class and said class defining code piece (2) defining said first class are bound into a program.

8. A method according to claim 7, wherein said program is executed on a server in a network.

9. A method according to any preceding claim, wherein said programming language is a scripting language.

10. A method according to claim 9, wherein said scripting language is the Visual Basic Scripting language.

11. A method according to claim 10, wherein an object is defined by an array consisting of a dictionary object and a class description array.

12. A method according to claim 10, wherein said first and second classes are in the form of Active Server Pages.

13. A method according to any preceding claim, wherein the name of the over-write method is determined by combining a predetermined string with the name of the given method being over-written.

14. A computer program provided in accordance with the method of one of claims 1 to 13.

15. A computer readable data storage device storing a computer program according to claim 14.

16. A data processing device comprising a data storage device for storing programs and a data processor for executing programs stored in said data storage device, wherein said data storage device stores the computer program of claim 14.

17. A data processing device according to claim 16, wherein said data processing device is a server in a network.

## Patentansprüche

1. Programmierverfahren für die Bereitstellung eines Polymorphismus in einer Programmiersprache, die standardmäßig keinen Polymorphismus bereitstellt, wobei, um zu ermöglichen, dass eine gegebene Methode in einer ersten Klasse in Klassen überschrieben wird, die aus der ersten Klasse abgeleitet wurden, eine Bestimmungsprozedur (221, 222, 223, 224, 225) zum Überschreiben einer Methode der gegebenen Methode zugeordnet wird, indem der Bestimmungsvorgang (221, 222, 223, 224, 225) in einen eine Methode definierenden Codeabschnitt (22) einbezogen wird, welcher zu der gegebene Methode gehört,
wobei zum Überschreiben der gegebenen Methode in einer zweiten Klasse, die aus der ersten Klasse abgeleitet wurde
eine Kennung (110) für das Methodenüberschreiben der zweiten Klasse zugeordnet wird, wobei die Kennung (110) für das Methodenüberschreiben die gegebene Methode als zu überschreiben kennzeichnet, und
eine Überschreibe-Methode der zweiten Klasse zugeordnet wird, wobei die Überschreibe-Methode die gegebenen Methode überschreibt,
wobei der Bestimmungsvorgang (221, 222, 223, 224, 225) für das Methodenüberschreiben dafür ausgelegt ist, das er bei Aufruf der gegebenen Methode für ein Objekt feststellt, ob die Klasse, zu welcher das Objekt gehört, einer Kennung für das Methodenüberschreiben zugeordnet ist, welche die gegebene Methode identifiziert,
und die gegebene Methode für das Objekt ausführt, wenn die Klasse, zu welcher das Objekt gehört, nicht zu einer Kennung für das Methodenüberschreiben gehört, welche die gegebene Methode identifiziert bzw. kennzeichnet, und
eine Überschreibe-Methode für das Objekt ausführt, die zu der Klasse gehört, zu welcher das Objekt gehört, wenn in der Klasse, zu welcher das Objekt gehört, eine Kennung für das Methodenüberschreiben zugeordnet ist, welche die gegebene Methode identifiziert bzw. kennzeichnet.

2. Verfahren nach Anspruch 1, wobei der Schritt des Zuordnens der Kennung (110) für das Methodenüberschreiben zu der zweiten Klasse das Einbeziehen der Kennung (110) für das Methodenüberschreiben in einen Codeabschnitt (11) für eine Klassenbeschreibung aufweist, welcher zu der zweiten Klasse gehört.

3. Verfahren nach Anspruch 2, wobei der Codeabschnitt (11) der Klassenbeschreibung eine Erklärung einer Klassenbeschreibungsanordnung aufweist, wobei die Klassenbeschreibungsanordnung eine oder mehrere Kennungen (110) für das Methodenüberschreiben enthält.

4. Verfahren nach Anspruch 3, wobei die einen oder mehreren Kennungen zum Überschreiben Strings (Stränge) sind, wobei jeder String der Name einer überschriebenen Methode ist.

5. Verfahren nach Anspruch 3 oder 4, wobei die Klassenbeschreibungsanordnung weiterhin den Namen der Klasse enthält, welche sie beschreibt sowie den Namen der Klasse, aus welcher sie direkt abgeleitet wurde bzw. wird.

6. Verfahren nach Anspruch 2, wobei
der Codeabschnitt (11) für die Klassenbeschreibung der zweiten Klasse zugeordnet wird, indem er in einen eine Klasse definierenden Codeabschnitt (1) aufgenommen wird, welcher die zweite Klasse definiert, und
wobei der die Methode definierende Codeabschnitt (22), der ersten Klassenmethode zugeordnet wird, indem er in einem eine Klasse definierenden Codeabschritt (2) aufgenommen wird, welcher die erste Klasse definiert.

7. Verfahren nach Anspruch 6, wobei der die Klasse definierende Code (1), welcher die zweite Klasse definiert, und der die Klasse definierende Codeabschnitt (2), welcher die erste Klasse definiert, in ein Programm eingebunden sind.

8. Verfahren nach Anspruch 7, wobei das Programm auf einem Server in einem Netzwerk ausgeführt wird.

9. Verfahren nach einem der vorstehenden Ansprüche, wobei die Programmiersprache eine Skript-Sprache ist.

10. Verfahren nach Anspruch 9, wobei die Skript-Sprache Visual Basic ist.

11. Verfahren nach Anspruch 10, wobei ein Objekt durch ein Array definiert wird, das aus einem Wörterbuchobjekt und einer Klassenbeschreibungsanordnung besteht.

12. Verfahren nach Anspruch 10, wobei die ersten und zweiten Klassen in Form von aktiven Serverseiten vorliegen.

13. Verfahren nach einem der vorstehenden Ansprüche, wobei der Name der überschriebenen Methode bestimmt wird durch Kombinieren eines vorbestimmten Strings (Stranges) mit dem Namen der gegebenen Methode, welche überschrieben wird.

14. Computerprogramm, welches gemäß dem Verfahren nach einem der Ansprüche 1 bis 13 bereitgestellt wird.

15. Computerlesbare Datenspeichereinrichtung, welche ein Computerprogramm nach Anspruch 14 speichert.

16. Datenverarbeitungsvorrichtung, welche eine Datenspeichereinrichtung zum Speichern von Programmen und einen Datenprozessor zum Ausführen von Programmen aufweist, welche in der Datenspeichereinrichtung gespeichert sind, wobei die Datenspeichereinrichtung das Computerprogramm nach Anspruch 14 speichert.

17. Datenverarbeitungsvorrichtung nach Anspruch 16, wobei die Datenverarbeitungsvorrichtung ein Server in einem Netzwerk ist.

## Revendications

1. Procédé de programmation pour fournir un polymorphisme dans un langage de programmation qui, par défaut, ne peut pas fournir de polymorphisme, dans lequel, pour permettre à un procédé donné dans une première classe d'être écrasé dans des classes dérivées de ladite première classe, une procédure de détermination d'écrasement de procédé (221, 222, 223, 224, 225) est associée audit procédé donné en insérant ladite procédure de détermination d'écrasement de procédé (221, 222, 223, 224, 225) dans un élément de code de définition de procédé (22) associé audit procédé donné,
dans lequel, pour écraser le procédé donné dans une deuxième classe dérivée de la première classe,
un identificateur d'écrasement de procédé (110) est associé à ladite deuxième classe, où ledit identificateur d'écrasement de procédé (110) identifie ledit procédé donné à écraser, et
un procédé d'écrasement est associé à ladite deuxième classe, ledit procédé d'écrasement écrasant ledit procédé donné,
dans lequel ladite procédure de détermination d'écrasement de procédé (221, 222, 223, 224, 225) est agencée,
à l'invocation dudit procédé donné pour un objet, pour déterminer si la classe à laquelle appartient ledit objet est associée à un identificateur d'écrasement de procédé qui identifie ledit procédé donné,
pour exécuter ledit procédé donné pour ledit objet, si la classe à laquelle appartient ledit objet n'est pas associée à un identificateur d'écrasement de procédé qui identifie ledit procédé donné, et
pour exécuter un procédé d'écrasement associé à la classe à laquelle appartient ledit objet pour ledit objet, si la classe à laquelle appartient ledit objet est associée à un identificateur d'écrasement de procédé qui identifie ledit procédé donné.

2. Procédé selon la revendication 1, dans lequel l'étape d'association dudit identificateur d'écrasement de procédé (110) à ladite deuxième classe comprend l'insertion dudit identificateur d'écrasement de procédé (110) dans un élément de code de description de classe (11) associé à ladite deuxième classe.

3. Procédé selon la revendication 2, dans lequel ledit élément de code de description de classe (11) comprend une déclaration d'une matrice de description de classe, où ladite matrice de description de classe contient un ou plusieurs identificateurs d'écrasement de procédé (110).

4. Procédé selon la revendication 3, dans lequel lesdits un ou plusieurs identificateurs d'écrasement sont des chaînes, chaque chaîne étant le nom d'un procédé écrasé.

5. Procédé selon la revendication 3 ou 4, dans lequel ladite matrice de description de classe contient de plus le nom de la classe qu'elle décrit et le nom de la classe de laquelle elle est directement dérivée.

6. Procédé selon la revendication 2, dans lequel
ledit élément de code de description de classe (11) est associé à ladite deuxième classe en étant inséré dans un élément de code de définition de classe (1) définissant ladite deuxième classe, et
ledit élément de code de définition de procédé (22) est associé audit procédé de première classe en étant inséré dans un élément de code de définition de classe (2) définissant ladite première classe.

7. Procédé selon la revendication 6, dans lequel ledit élément de code de définition de classe (1) définissant ladite deuxième classe et ledit élément de code de définition de classe (2) définissant ladite première classe sont liés dans un programme.

8. Procédé selon la revendication 7, dans lequel ledit programme est exécuté sur un serveur dans un réseau.

9. Procédé selon l'une quelconque des revendications précédentes, dans lequel ledit langage de programmation est un langage de script.

10. Procédé selon la revendication 9, dans lequel ledit langage de script est le langage de script Visual Basic.

11. Procédé selon la revendication 10, dans lequel un objet est défini par une matrice comprenant un objet de dictionnaire et une matrice de description de classe.

12. Procédé selon la revendication 10, dans lequel lesdites première et deuxième classes sont sous la forme de pages de serveur actives.

13. Procédé selon l'une quelconque des revendications précédentes, dans lequel le nom du procédé d'écrasement est déterminé en combinant une chaîne prédéterminée avec le nom du procédé donné qui est écrasé.

14. Programme d'ordinateur fourni conformément au procédé selon l'une des revendications 1 à 13.

15. Dispositif de stockage de données lisible par ordinateur stockant un programme d'ordinateur selon la revendication 14.

16. Dispositif de traitement de données comprenant un dispositif de stockage de données pour stocker des programmes et un processeur de données pour exécuter des programmes stockés dans ledit dispositif de stockage de données, dans lequel ledit dispositif de stockage de données stocke le programme d'ordinateur selon la revendication 14.

17. Dispositif de traitement de données selon la revendication 16, dans lequel ledit dispositif de traitement de données est un serveur dans un réseau.
